# FASCICULE DE BREVET EUROPEEN

(11) **EP 3 253 616 B1**
(45) Date de publication et mention de la délivrance du brevet: **22.05.2019**
(21) Numéro de dépôt: 16703171.5
(22) Date de dépôt: 29.01.2016
(51) Int. Cl.: B60N 2/75, B60N 2/02, B60N 2/90

(54) **BANQUETTE A DOSSIERS INCLINABLES INDEPENDAMMENT INTEGRANT UN SYSTEME DE PROTECTION ANTI-PINCEMENT**
BANKSITZ MIT VERSTELLBAREN SITZLEHNEN MIT JE EINEM SEPARATEN EINGEBAUTEN SYSTEM FÜR EINKLEMMSCHUTZ
BENCH SEAT WITH RECLINABLE SEATBACKS, EACH SEPARATELY HAVING A BUILT-IN SYSTEM FOR ANTI-PINCHING PROTECTION

(30) Priorité: 03.02.2015 FR 1550833
(43) Date de publication de la demande: 13.12.2017
(73) Titulaire: PSA AUTOMOBILES S.A., 78300 Poissy (FR)
(72) Inventeur: COMBET, Fabrice, 70400 Hericourt (FR); COMBEAU, Frederic, 25750 Desandans (FR); MARTIN, Philippe, 25200 Montbeliard (FR)
(86) Numéro de dépôt international: PCT/FR2016/050190
(87) Numéro de publication internationale: WO 2016/124840

(56) Documents cités:
- DE-A1-102009 004 304
- DE-A1-102010 048 682
- FR-A1- 2 899 849

## Description

### Domaine de l'invention

La présente invention a trait au domaine des dispositifs d'assise pour véhicules automobile. Elle concerne en particulier les banquettes de type comprenant deux dossiers disposés côte à côte dans le sens de la largeur du véhicule et inclinables de manière indépendante.

### Arrière-plan de l'invention

Les véhicules automobiles comprennent généralement dans la partie arrière de leur habitacle, une banquette destinée à accueillir plusieurs passagers.

Celle-ci comporte classiquement deux dossiers disposés côte à côte dans le sens de la largeur du véhicule et présentant des dimensions différentes : le premier représentant environ 1/3 ou 40% de la largeur totale de la banquette tandis que le second représente environ 2/3 ou 60% de cette même largeur.

Une telle banquette peut comprendre également un accoudoir monté à pivotement sur le second dossier au niveau de son extrémité latérale interne, entre une position escamotée dans laquelle cet accoudoir est reçu dans un logement complémentaire ménagé dans la matelassure de ce second dossier de sorte à former une surface d'appui pour le dos d'un passager assis du côté interne de ce second dossier, et une position déployée d'utilisation dans laquelle celui-ci s'étend sensiblement horizontalement de sorte à former une surface d'appui pour le bras d'un passager assis du côté externe de ce second dossier.

Dans l'état de la technique le document DE 10 2010 048682une banquette pour véhicule comportant un premier dossier et un second dossier disposés côte à côte dans le sens de la largeur dudit véhicule et dont l'inclinaison est réglable de manière indépendante via des moyens de commande électriques. Un accoudoir monté à pivotement sur le second dossier au niveau de son extrémité latérale interne jouxtant le premier dossier, entre une position escamotée dans laquelle il est reçu dans un logement complémentaire ménagé dans la matelassure du second dossier de sorte à former une surface d'appui pour le dos d'un passager assis du côté interne de ce second dossier et une position déployée d'utilisation dans laquelle celui-ci s'étend sensiblement horizontalement de sorte à former une surface d'appui pour le bras d'un passager assis du côté externe de ce second dossier.

Afin d'offrir un confort maximal aux passagers, certains types de véhicules haut de gamme proposent un réglage indépendant de l'inclinaison des deux dossiers sur une plage prédéterminée via des moyens de commande électriques.

Lorsque l'inclinaison vers l'arrière du second dossier est beaucoup plus prononcée que celle du premier dossier tandis que l'accoudoir occupe sa position déployée d'utilisation, un certain jour existe entre la face arrière du premier dossier et la face avant du second dossier : ce dernier étant suffisant pour y permettre l'introduction d'un corps tel qu'un doigt ou une main d'un passager du véhicule.

Dans un tel cas de figure, le pivotement vers l'arrière du premier siège ou celui vers l'avant du second siège peut ainsi entrainer le pincement voire l'écrasement de ce corps avec les risques de blessure qui en découlent.

### Objet et résumé de l'invention

La présente invention vise donc à améliorer le niveau de sécurité d'une telle banquette en évitant tout risque de pincement ou d'écrasement pour les passagers.

Elle propose à cet effet une banquette pour véhicule automobile comportant :
- un premier dossier et un second dossier disposés côte à côte dans le sens de la largeur dudit véhicule et dont l'inclinaison est réglable de manière indépendante via des moyens de commande électriques ;
- un accoudoir monté à pivotement sur le second dossier au niveau de son extrémité latérale interne jouxtant le premier dossier, entre une position escamotée dans laquelle il est reçu dans un logement complémentaire ménagé dans la matelassure du second dossier de sorte à former une surface d'appui pour le dos d'un passager assis du côté interne de ce second dossier, et une position déployée d'utilisation dans laquelle celui-ci s'étend sensiblement horizontalement de sorte à former une surface d'appui pour le bras d'un passager assis du côté externe de ce second dossier ;
   caractérisée en ce qu'elle comporte en outre des moyens de détection de la position de l'accoudoir aptes, lorsque ce dernier n'occupe pas ladite position escamotée, à coopérer avec lesdits moyens de commande électriques pour bloquer le pivotement vers l'arrière du premier dossier et le pivotement vers l'avant du second dossier.

Ce couplage entre les moyens de détection de la position de l'accoudoir et ceux de commande électriques de l'inclinaison des dossiers permet ainsi d'empêcher les dossiers de se mouvoir l'un vers l'autre tant que l'accoudoir n'est pas rabattu dans sa position escamotée, de sorte à éviter tout effet de cisaillement entre ces deux dossiers.

La banquette selon l'invention écarte ainsi tout risque de blessure des passagers par pincement ou écrasement des doigts entre les deux sièges.

Selon des caractéristiques préférées de cette banquette, prises seules ou en combinaison :
- lesdits moyens de détection sont de type sans contact ;
- lesdits moyens de détection comportent un capteur à effet Hall associé à une mire magnétique et disposés respectivement dans la matelassure du second dossier et dans celle de l'accoudoir ou vice-versa ;
- le capteur à effet Hall est implanté à l'aplomb du logement ménagé dans la matelassure du second dossier, la mire magnétique étant disposée dans la matelassure de l'accoudoir au niveau de son extrémité libre ;
- lesdits moyens de détection comportent un capteur photosensible ;
- lesdits moyens de détection comportent un capteur infrarouge ;
- lesdits moyens de détection comportent un capteur mécanique de position tout ou rien de type mini-rupteur, ce dernier comprenant par exemple un corps fixe relié rigidement à l'armature du second dossier et un organe de commande mobile à poussoir dont l'actionnement par une came solidaire de l'accoudoir lors de la mise en position escamotée de ce dernier entraine l'ouverture ou la fermeture d'un circuit électrique ; et/ou
- lesdits moyens de détection de la position de l'accoudoir sont aptes, lorsque ce dernier n'occupe pas ladite position escamotée, à coopérer avec lesdits moyens de commande électriques pour empêcher le pivotement des premier et second dossiers dans les deux sens.

L'invention vise également sous un deuxième aspect, un véhicule automobile comportant une telle banquette.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue de face de la banquette pour véhicule automobile selon l'invention dans laquelle l'accoudoir occupe sa position escamotée ;
- la figure 2 est une vue en section de cette banquette prise selon le plan II-II de la figure 1 correspondant au plan médian de l'accoudoir ;
- la figure 3 est une vue similaire à la figure 2 mais sur laquelle l'accoudoir occupe sa position déployée d'utilisation ;
- la figure 4 représente une vue de trois quart avant en perspective des deux dossiers de la banquette dans une configuration où l'inclinaison vers l'arrière du second dossier est beaucoup plus prononcée que celle du premier dossier tandis que l'accoudoir occupe sa position déployée d'utilisation ; et
- la figure 5 représente une vue similaire à la figure 4 mais sur laquelle l'accoudoir occupe sa position escamotée.

### Description détaillée d'un mode préféré de réalisation

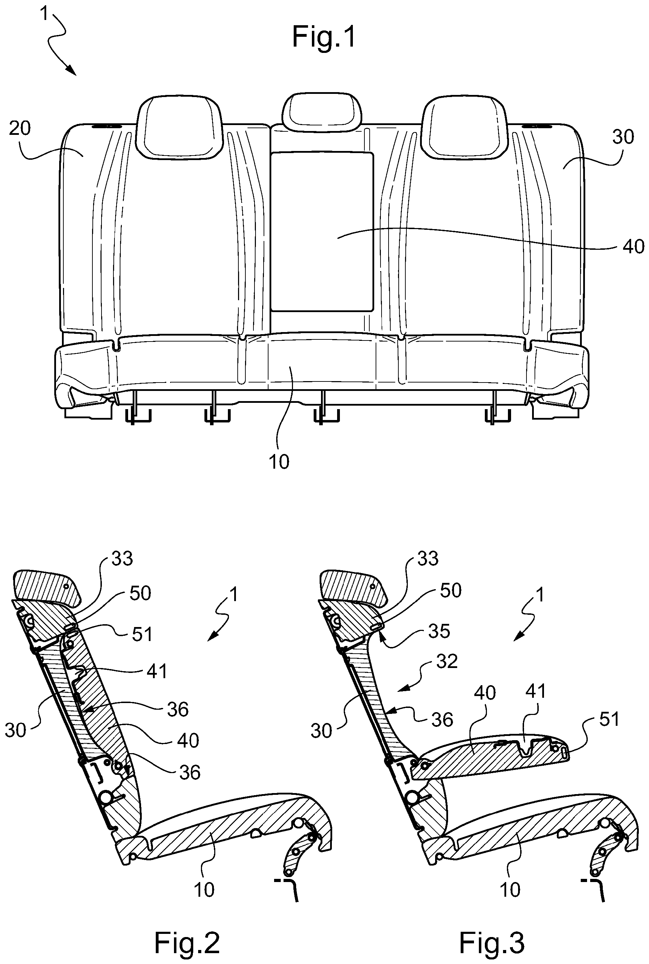

La figure 1 représente une vue de face d'une banquette 1 pour véhicule automobile destinée à être implantée dans la partie arrière de l'habitacle d'un véhicule automobile.

La banquette 1 destinée à accueillir jusqu'à trois passagers, comporte une assise 10 dont l'armature est fixée sur le plancher du véhicule, ainsi que deux dossiers 20, 30 de largeurs différentes disposés côte à côte selon une direction transversale.

Le premier dossier 20 destiné à recevoir le dos d'un unique passager représente environ 40% de la largeur totale de la banquette 1, tandis que le second dossier 30 pouvant accueillir jusqu'à deux passagers représente environ 60% de cette même largeur.

Les deux dossiers 20, 30 sont montés pivotants autour d'un axe transversal, leur inclinaison étant réglable de manière indépendante sur une plage angulaire prédéterminée via des moyens de commande électriques.

Ces derniers, non représentés sur les figures, comportent des boutons d'actionnement situés sur les accoudoirs des deux portes latérales arrière du véhicule et permettent de faire varier à la hausse ou à la baisse l'inclinaison de chacun de ces dossiers 20, 30 sur une plage d'inclinaison prédéterminée par rapport à la verticale et s'étendant sur de préférence sur une dizaine de degrés (en l'espèce, entre 23° et 33° vers l'arrière).

La banquette 1 comporte également un accoudoir 40 monté à pivotement sur le second dossier 30 au niveau de son extrémité latérale interne (celle jouxtant le premier dossier 20) et dont la largeur représente environ 1/3 de celle du second dossier 30 et 20% de la largeur totale de la banquette.

Cet accoudoir 40 est conformé pour être reçu dans un logement complémentaire 32 ménagé dans la matelassure 33 du second dossier 30, ce logement 32 étant délimité par un retour latéral externe 34 s'étendant verticalement, deux retours supérieur 35 et inférieur 36 sensiblement perpendiculaires au plan moyen du dossier 30, ainsi que par une surface de fond 36.

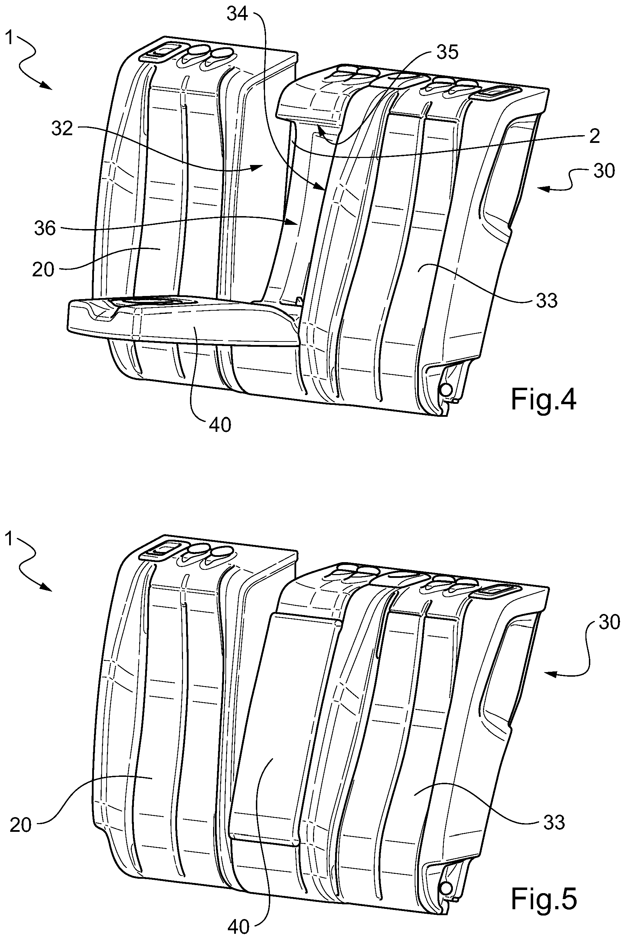

L'accoudoir 40 peut être déplacé entre une position escamotée (illustrée sur les figures 1, 2 et 5) dans laquelle il est reçu dans le logement complémentaire 32 de sorte à former une surface d'appui pour le dos d'un passager assis du côté interne de ce dossier 30 (ce dernier pouvant alors accueillir simultanément deux passagers assis côte à côte), et une position déployée d'utilisation (illustrée sur les figures 3 et 4) dans laquelle cet accoudoir 40 s'étend sensiblement horizontalement de sorte à former une surface d'appui pour le bras d'un passager assis du côté externe de ce second dossier 30.

Lorsque l'inclinaison vers l'arrière du second dossier 30 est beaucoup plus prononcée que celle du premier dossier 20 tandis que l'accoudoir 40 occupe sa position déployée d'utilisation (tel qu'illustré sur la figure 4 où les premier et second dossiers 20, 30 sont respectivement inclinés à 23 et 33° vers l'arrière), on peut constater qu'il existe au niveau de la zone d'interface entre ces deux dossiers 20, 30, un jour 2 situé entre la face arrière du premier dossier 20 et la face avant du second dossier 30, et dont les dimensions sont suffisantes pour permettre d'y glisser au travers des corps tels que le doigt ou la main d'un passager.

Selon l'invention, la banquette 1 comprend des moyens aptes à détecter la position dans laquelle se trouve l'accoudoir 40.

Ces moyens de détection sont constitués par un capteur de position sans contact de type à effet Hall 50 associé à une mire magnétique 51 et relié aux moyens de commande électriques de l'inclinaison des dossiers 20, 30.

Comme illustrée sur les figures 2 et 3, le capteur 50 est implanté dans la matelassure 33 à l'aplomb du logement 32 (juste au dessus du retour supérieur 35) tandis que la mire magnétique 51 est disposée dans la matelassure 41 de l'accoudoir 40 au niveau de son extrémité libre.

Lorsque ce capteur 50 détecte que l'accoudoir 40 n'occupe pas sa position escamotée, celui-ci transmet aux moyens de commande électriques l'ordre de bloquer le pivotement vers l'arrière du premier dossier 20 ainsi que le pivotement vers l'avant du second dossier 30, malgré l'actionnement des boutons correspondants de ces moyens de commande.

Cela permet ainsi d'éviter tout risque de pincement ou d'écrasement d'un doigt ou d'une main glissé malencontreusement au travers du jour 2 par effet de cisaillement entre les deux dossiers 20, 30.

L'usager souhaitant modifier librement l'inclinaison de son dossier 20 ou 30 doit donc préalablement ramener l'accoudoir 40 dans sa position escamotée où ce dernier occulte complètement le jour 2 ce qui écarte tout risque de pincement ou d'écrasement.

On remarquera que cette occultation du jour 2 demeure totale même lorsque la différence d'inclinaison entre les dossiers 20, 30 est maximale comme illustré sur la figure 5 sur laquelle ces derniers sont respectivement inclinés à 23 et 33° vers l'arrière.

Selon des variantes de réalisation non représentées de l'invention, le positionnement du capteur à effet Hall et celui de la mire sont inversés.

Selon d'autres variantes de réalisation non représentées, le capteur à effet Hall et la mire sont positionnées respectivement derrière le retour latéral externe 34 de la matelassure 33 du dossier 30 et derrière le côté latéral correspondant de l'accoudoir 40, ou vice-versa.

Selon encore d'autres variantes de réalisation non représentées :
- les moyens de détection de la position de l'accoudoir 40 sont aptes, lorsque ce dernier n'occupe pas la position escamotée, à coopérer avec les moyens de commande électriques pour empêcher le pivotement des premier et second dossiers dans les deux sens (vers l'avant et l'arrière) ;
- les moyens de détection de la position de l'accoudoir sont de type sans contact mais basés sur d'autres principes physiques (utilisation d'un capteur capacitif, photosensible, infrarouge, à ultrasons, à courants de Foucault, etc...) ; et/ou
- les moyens de détection de la position de l'accoudoir comportent un capteur mécanique de position tout ou rien (TOR) de type mini-rupteur comprenant un corps fixe relié rigidement à l'armature du dossier 30 et un organe de commande mobile à poussoir dont l'actionnement par une came solidaire de l'accoudoir 40 lors de la mise en position escamotée de ce dernier entraine l'ouverture ou la fermeture d'un circuit électrique.

D'une manière générale, on rappelle que la présente invention ne se limite pas aux formes de réalisation décrites et représentées, mais qu'elle englobe toute variante d'exécution qui s'englobe dans l'objet des revendications.

## Revendications

1. Banquette pour véhicule automobile comportant :
- un premier dossier (20) et un second dossier (30) disposés côte à côte dans le sens de la largeur dudit véhicule et dont l'inclinaison est réglable de manière indépendante via des moyens de commande électriques ;
- un accoudoir (40) monté à pivotement sur le second dossier (30) au niveau de son extrémité latérale interne jouxtant le premier dossier (20), entre une position escamotée dans laquelle il est reçu dans un logement complémentaire (32) ménagé dans la matelassure (33) du second dossier (30) de sorte à former une surface d'appui pour le dos d'un passager assis du côté interne de ce second dossier (30), et une position déployée d'utilisation dans laquelle celui-ci s'étend sensiblement horizontalement de sorte à former une surface d'appui pour le bras d'un passager assis du côté externe de ce second dossier (30) ;
**caractérisée en ce qu'**elle comporte en outre des moyens de détection (50, 51) de la position de l'accoudoir (40) aptes, lorsque ce dernier n'occupe pas ladite position escamotée, à coopérer avec lesdits moyens de commande électriques pour bloquer le pivotement vers l'arrière du premier dossier (20) et le pivotement vers l'avant du second dossier (30).

2. Banquette pour véhicule automobile selon la revendication 1, **caractérisée en ce que** lesdits moyens de détection sont de type sans contact.

3. Banquette pour véhicule automobile selon la revendication 2, **caractérisée en ce que** lesdits moyens de détection comportent un capteur à effet Hall (50) associé à une mire magnétique (51) et disposés respectivement dans la matelassure (33) du second dossier (30) et dans celle de l'accoudoir (40) ou vice-versa.

4. Banquette pour véhicule automobile selon la revendication 3, **caractérisée en ce que** le capteur à effet Hall (50) est implanté à l'aplomb du logement ménagé dans la matelassure (33) du second dossier (30), la mire magnétique (51) étant disposée dans la matelassure de l'accoudoir (40) au niveau de son extrémité libre.

5. Banquette pour véhicule automobile selon la revendication 2, **caractérisée en ce que** lesdits moyens de détection comportent un capteur photosensible.

6. Banquette pour véhicule automobile selon la revendication 2, **caractérisée en ce que** lesdits moyens de détection comportent un capteur infrarouge.

7. Banquette pour véhicule automobile selon la revendication 1, **caractérisée en ce que** lesdits moyens de détection comportent un capteur mécanique de position tout ou rien de type mini-rupteur.

8. Banquette pour véhicule automobile selon la revendication 7, **caractérisée en ce que** le capteur mécanique de position comprend un corps fixe relié rigidement à l'armature du second dossier (30) et un organe de commande mobile à poussoir dont l'actionnement par une came solidaire de l'accoudoir (40) lors de la mise en position escamotée de ce dernier entraine l'ouverture ou la fermeture d'un circuit électrique.

9. Banquette pour véhicule automobile selon l'une des revendications 1 à 8, **caractérisée en ce que** lesdits moyens de détection de la position de l'accoudoir (40) sont aptes, lorsque ce dernier n'occupe pas ladite position escamotée, à coopérer avec lesdits moyens de commande électriques pour empêcher le pivotement des premier et second dossiers (30, 40) dans les deux sens.

10. Véhicule automobile comportant une banquette selon l'une des revendications 1 à 9.

## Patentansprüche

1. Banksitz für Kraftfahrzeug, der Folgendes umfasst
- eine erste Sitzlehne (20) und eine zweite Sitzlehne (30), die nebeneinander in die Richtung der Breite des Fahrzeugs angeordnet sind, und deren Neigung auf unabhängige Art über elektrische Steuermittel einstellbar ist;
- eine Armlehne (40), die auf der zweiten Sitzlehne (30) im Bereich ihres inneren seitlichen Endes benachbart zu der ersten Sitzlehne (20) zwischen einer eingefahrenen Position, in der sie in einer komplementären Aufnahme (32) aufgenommen ist, die in der Polsterung (33) der zweiten Sitzlehne (30) derart eingerichtet ist, dass eine Auflageoberfläche für den Rücken eines Insassen, der auf der internen Seite dieser zweiten Sitzlehne (30) sitzt, gebildet ist, und einer ausgefahrenen Gebrauchsposition, in der sie sich im Wesentlichen horizontal derart erstreckt, dass sie eine Auflageoberfläche für den Arm eines Insassen, der auf der äußeren Seite dieser zweiten Sitzlehne (30) sitzt, schwenkend montiert ist;
**dadurch gekennzeichnet, dass** sie außerdem Mittel zum Erfassen (50, 51) der Position der Armlehne (40) umfasst, die geeignet sind, um, wenn diese Letztere die eingefahrene Position nicht belegt, mit den elektrischen Steuermitteln zusammenzuwirken, um das Schwenken zu der Rückseite der ersten Sitzlehne (20) und das Schwenken nach vorn der zweiten Sitzlehne (30) zu blockieren.

2. Banksitz für Kraftfahrzeug nach Anspruch 1, **dadurch gekennzeichnet, dass** die Erfassungsmittel vom berührungslosen Typ sind.

3. Banksitz für Kraftfahrzeug nach Anspruch 2, **dadurch gekennzeichnet, dass** die Erfassungsmittel einen Halleffekt-Sensor (50) umfassen, der mit einer magnetischen Zielvorrichtung (51) assoziiert ist, und die jeweils in der Polsterung (33) der zweiten Sitzlehne (30) und in der der Armlehne (40) oder umgekehrt angeordnet sind.

4. Banksitz für Kraftfahrzeug nach Anspruch 3, **dadurch gekennzeichnet, dass** der Halleffekt-Sensor (50) in der Senkrechten der Aufnahme implantiert ist, die in der Polsterung (33) der zweiten Sitzlehne (30) eingerichtet ist, wobei die magnetische Zielvorrichtung (51) in der Polsterung der Armlehne (40) im Bereich ihres freien Endes angeordnet ist.

5. Banksitz für Kraftfahrzeug nach Anspruch 2, **dadurch gekennzeichnet, dass** die Erfassungsmittel einen lichtempfindlichen Sensor umfassen.

6. Banksitz für Kraftfahrzeug nach Anspruch 2, **dadurch gekennzeichnet, dass** die Erfassungsmittel einen Infrarotsensor umfassen.

7. Banksitz für Kraftfahrzeug nach Anspruch 1, **dadurch gekennzeichnet, dass** die Erfassungsmittel einen mechanischen Aus-Ein-Positionssensor vom Typ Mikroschalter umfassen.

8. Banksitz für Kraftfahrzeug nach Anspruch 7, **dadurch gekennzeichnet, dass** der mechanische Positionssensor einen stationären Körper umfasst, der starr an der Bewehrung der zweiten Sitzlehne (30) und an einem beweglichen Steuerelement mit Drücker verbunden ist, dessen Betätigung durch einen Nocken, der fest mit der Armlehne (40) verbunden ist, beim Verstellen in eingefahrene Position dieses Letzteren das Öffnen oder das Schließen einer elektrischen Schaltung nach sich zieht.

9. Banksitz für Kraftfahrzeug nach einem der Ansprüche 1 bis 8, **dadurch gekennzeichnet, dass** die Erfassungsmittel der Position der Armlehne (40) geeignet sind, um, wenn diese Letztere nicht die eingefahrene Position belegt, mit den elektrischen Steuermitteln zusammenzuwirken, um das Schwenken der ersten und zweiten Sitzlehne (30, 40) in die zwei Richtungen zu verhindern.

10. Kraftfahrzeug, das einen Banksitz gemäß einem der Ansprüche 1 bis 9 umfasst.

## Claims

1. A bench seat for a motor vehicle comprising:
- a first seatback (20) and a second seatback (30) disposed side by side in the direction of the width of said vehicle and the inclination of which is adjustable independently via electrical control means;
- an armrest (40) pivotably mounted on the second seatback (30) at the level of its inner lateral end next to the first seatback (20), between a retracted position in which it is received in a complementary housing (32) arranged in the padding (33) of the second seatback (30) so as to form a support surface for the back of a passenger seated on the inner side of this second seatback (30), and a deployed position of use in which it extends substantially horizontally so as to form a support surface for the arm of a passenger seated on the outer side of this second seatback (30);
**characterized in that** it further comprises means (50, 51) for detecting the position of the armrest (40) which are able, when the latter is not occupying said retracted position, to cooperate with said electrical control means to block the rearward pivoting of the first seatback (20) and the pivoting of the second seatback (30) toward the front.

2. The bench seat for a motor vehicle according to Claim 1, **characterized in that** said detection means are of the non-contact type.

3. The bench seat for a motor vehicle according to Claim 2, **characterized in that** said detection means comprise a Hall effect sensor (50) associated with a magnetic target (51) and disposed respectively in the padding (33) of the second seatback (30) and **in that** of the armrest (40) or vice versa.

4. The bench seat for a motor vehicle according to Claim 3, **characterized in that** the Hall effect sensor (50) is installed plumb with the housing arranged in the padding (33) of the second seatback (30), the magnetic target (51) being disposed in the padding of the armrest (40) at the level of its free end.

5. The bench seat for a motor vehicle according to Claim 2, **characterized in that** said detection means comprise a photosensitive sensor.

6. The bench seat for a motor vehicle according to Claim 2, **characterized in that** said detection means comprise an infrared sensor.

7. The bench seat for a motor vehicle according to Claim 1, **characterized in that** said detection means comprise an all or nothing mechanical position sensor of the micro-switch type.

8. The bench seat for a motor vehicle according to Claim 7, **characterized in that** the mechanical position sensor includes a fixed body connected rigidly to the frame of the second seatback (30) and a movable pushbutton control member, the actuation of which by a cam integral with the armrest (40) during the placing of the latter into retracted position brings about the opening or closing of an electrical circuit.

9. The bench seat for a motor vehicle according to one of Claims 1 to 8, **characterized in that** said detection means of the position of the armrest (40) are able, when the latter is not occupying said retracted position, to cooperate with said electrical control means to prevent the pivoting of the first and second seatbacks (30, 40) in the two directions.

10. A motor vehicle comprising a bench seat according to one of Claims 1 to 9.
